# FASCICULE DE BREVET EUROPEEN

(11) **EP 4 008 608 B1**
(45) Date de publication et mention de la délivrance du brevet: **30.08.2023**
(21) Numéro de dépôt: 21211246.0
(22) Date de dépôt: 30.11.2021
(51) Int. Cl.: B62D 21/02, B62D 24/00, B62D 33/077

(54) **VÉHICULE DOTÉ D'UN CHÂSSIS ARRIÈRE DESTINÉ À SOUTENIR UN DISPOSITIF DE CHARGEMENT**
FAHRZEUG MIT EINEM HINTEREN RAHMEN, DER ZUR AUFLAGE EINER LADEVORRICHTUNG BESTIMMT IST
VEHICLE PROVIDED WITH A REAR FRAME INTENDED FOR SUPPORTING A LOADING DEVICE

(30) Priorité: 03.12.2020 FR 2012606
(43) Date de publication de la demande: 08.06.2022
(73) Titulaire: Renault s.a.s, 92100 Boulogne Billancourt (FR)
(72) Inventeur: BILLON, Florent, 78084 GUYANCOURT CEDEX (FR); DELORD, Christian, 78640 VILLIERS SAINT FREDERIC (FR)
(74) Mandataire: Renault Group

(56) Documents cités:
- WO-A1-2005/002951
- WO-A1-2016/134281
- DE-U1- 29 800 368
- JP-A- 2000 219 147
- JP-A- 2007 131 050

## Description

La présente invention concerne un véhicule doté d'un châssis arrière destiné à soutenir un dispositif de chargement.

Généralement, ce type de véhicule comprend une cabine de pilotage comportant un siège conducteur et au moins un siège passager placé à côté du siège conducteur, le châssis étant placé derrière cette cabine de pilotage. Le dispositif de chargement peut par exemple être constitué par une benne, un plateau, ou des containers.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

De plus, les notions de « vertical » et « horizontal » sont à considérer comme si le véhicule reposait sur un sol horizontal.

De façon générale, un tel châssis comprend schématiquement deux longerons parallèles, s'étendant selon un axe longitudinal X de véhicule. Les longerons sont des pièces creuses, délimitées chacun par deux parois parallèles s'inscrivant dans un plan vertical et longitudinal XZ du véhicule. Ces parois possèdent chacune un bord replié à 90°, et ces parois sont agencées dans le véhicule de telle façon que le bord replié représente la partie la plus haute de chaque paroi. De cette manière, les deux bords repliés se retrouvent à la même altitude et s'inscrivent tous les deux dans un même plan qui est sensiblement horizontal si le véhicule repose lui-même sur un sol horizontal. Les deux parois longitudinales et verticales des longerons, délimitent un espace interne et les bords repliés sont conçus pour s'étendre vers l'extérieur desdites parois, autrement dit sans délimiter cet espace interne. Une paroi horizontale supérieure relie les deux parois verticales de chaque longeron pour clôturer cet espace interne.

Actuellement la fixation d'un dispositif de chargement sur le châssis nécessite la présence de plusieurs entretoises allongées sur la paroi supérieure de chaque longeron, et régulièrement espacées le long dudit longeron. Ces entretoises, qui s'étendent sur le longeron suivant un axe transversal Y du véhicule, permettent de surélever le dispositif de chargement sur le châssis. Chaque entretoise repose sur les bords repliés des parois verticales du longeron, et sont fixées sur le longeron au moyen de deux pattes de fixation en forme d'équerre placées aux extrémités de l'entretoise, considérées suivant un axe longitudinal de ladite entretoise. Chaque patte de fixation présente deux parois planes perpendiculaires, dont une première paroi est fixée à une surface extérieure de la paroi verticale du longeron, et dont une deuxième paroi est fixée à une surface inférieure du bord replié. La deuxième paroi, le bord replié et une extrémité de l'entretoise possèdent chacun une ouverture traversante de forme circulaire et de même diamètre, lesdits trois éléments étant disposés les uns par rapport aux autres de façon à superposer lesdites trois ouvertures. L'ouverture traversante résultant de la superposition desdites trois ouvertures permet l'insertion de moyens de fixation tels que par exemple des systèmes de type vis/écrou, pour fixer le dispositif de chargement sur le châssis. Or, cette solution présente des inconvénients importants :
- la présence de plusieurs entretoises et des différentes pattes de fixation le long de chaque longeron augmente significativement le poids du véhicule,
- les bords repliés des parois verticales des longerons doivent posséder une largeur importante, typiquement supérieure à 30mm, de façon à pouvoir réaliser une ouverture dans ceux-ci sans fragiliser la structure du longeron. Il en résulte également une surcharge de poids pour le véhicule, liée à cette largeur importante.

Le JP 2000 219147 A divulgue un exemple de véhicule comprenant un châssis destiné à supporter un dispositif de chargement, ledit châssis comprenant deux longerons parallèles s'étendant suivant un axe longitudinal dudit véhicule, ledit véhicule comprenant des moyens de fixation dudit dispositif de chargement disposés le long de chaque longeron, des moyens de fixation comportant chacun une paroi supérieure comprenant un trou traversant pour la fixation du dispositif de chargement.

Un véhicule selon l'invention comprend un châssis destiné à fixer un dispositif de chargement, en s'affranchissant des inconvénients relevés dans l'état de la technique.

L'invention a pour objet un véhicule comprenant un châssis destiné à supporter un dispositif de chargement, ledit châssis comprenant deux longerons parallèles s'étendant suivant un axe longitudinal X dudit véhicule, chaque longeron étant délimité par deux parois verticales et parallèles s'étendant suivant un axe longitudinal X du véhicule et possédant chacune un bord supérieur replié à 90° s'étendant vers l'extérieur dudit longeron, ledit véhicule comprenant des moyens de fixation dudit dispositif de chargement disposés le long de chaque longeron et comportant chacun deux pattes de fixations alignées suivant un axe transversal Y du véhicule et placées de part et d'autre du longeron, chaque patte de fixation possédant une première paroi fixée à une paroi verticale du longeron et une deuxième paroi fixée à une surface inférieure du bord supérieur replié de ladite paroi verticale.

Selon l'invention, la deuxième paroi présente un tronçon d'extrémité émergeant du bord replié suivant un axe transversal Y du véhicule, ledit tronçon d'extrémité présentant une surépaisseur saillant au-dessus du bord replié et contre laquelle le dispositif de chargement est destiné à venir au contact, ladite surépaisseur étant dotée d'une ouverture. De cette manière, chaque patte de fixation permet :
- de s'affranchir de la présence d'une entretoise grâce à la présence de la surépaisseur qui saille au-dessus du bord replié,
- de déporter la fixation du dispositif de chargement hors du longeron grâce à la présence de l'ouverture dans ladite surépaisseur. Il n'est donc plus nécessaire que les bords repliés possèdent une largeur importante pour supporter un élément de fixation.

Il est à noter que les bords repliés d'un longeron s'étendent dans un même plan qui est horizontal lorsque le véhicule repose sur un sol horizontal. Le dispositif de chargement peut par exemple être constitué de panneaux, d'une benne ou d'une plateforme horizontale. Le dispositif de chargement vient reposer sur les surépaisseurs des pattes de fixation.

Selon une caractéristique possible de l'invention, l'ouverture de la surépaisseur est traversante pour le passage d'un élément de fixation. En effet, grâce à une telle ouverture, une vis peut par exemple être placée dans l'ouverture pour assurer la fixation du dispositif de chargement sur le châssis.

Selon une caractéristique possible de l'invention, l'ouverture traversante est de forme carrée et dont les coins sont arrondis.

Selon une caractéristique possible de l'invention, la première paroi est soudée à la paroi verticale du longeron. De cette manière, grâce à cette soudure, on élimine les moyens d'arrimage tels que par exemple des vis et des boulons qui risquent de surcharger le véhicule.

Selon une caractéristique possible de l'invention, chaque patte de fixation comprend trois éléments dont un premier élément comporte la première paroi et une première paroi d'épaisseur disposée à 90° de ladite première paroi et constituant une partie de la deuxième paroi, dont un deuxième élément est constitué par une deuxième paroi d'épaisseur se superposant à ladite première paroi d'épaisseur, et dont un troisième élément est constitué par une troisième paroi d'épaisseur se superposant à ladite deuxième paroi d'épaisseur, la deuxième paroi d'épaisseur et la troisième paroi d'épaisseur formant le tronçon d'extrémité de la deuxième paroi qui émerge du bord replié suivant un axe transversal Y du véhicule. Il s'agit d'une variante de réalisation d'une patte de fixation, qui est particulièrement adaptée à la fixation d'un dispositif de chargement dans un véhicule selon l'invention. Grâce à la présence de ces trois parois d'épaisseur, la hauteur de la surépaisseur est bien maitrisée.

Selon une caractéristique possible de l'invention, la première paroi d'épaisseur, la deuxième paroi d'épaisseur et la troisième paroi d'épaisseur possèdent chacune une ouverture, lesdites trois parois d'épaisseur étant disposées les unes par rapport aux autres de sorte que leurs ouvertures se superposent pour former l'ouverture traversante de la surépaisseur. L'ouverture résultant de la superposition de ces trois ouvertures va permettre l'introduction d'éléments de fixation tels que par exemple des vis pour assurer l'arrimage du dispositif de chargement dans un véhicule selon l'invention.

Selon une caractéristique possible de l'invention, chaque patte de fixation présente deux faces parallèles de forme triangulaire, chaque face triangulaire reliant la première paroi à la deuxième paroi et servant à consolider chaque point de fixation du dispositif de chargement en rigidifiant la patte de fixation. Ces faces triangulaires vont contribuer à rigidifier chaque patte de fixation afin d'empêcher que la première paroi et la deuxième paroi ne subissent trop d'efforts une fois que le dispositif de chargement aura été monté dans le véhicule.

Selon une caractéristique possible de l'invention, pour chaque patte de fixation, une face triangulaire relie la première paroi à la deuxième paroi d'épaisseur et l'autre face triangulaire relie la première paroi à la troisième paroi d'épaisseur.

Selon une caractéristique possible de l'invention, les parois d'épaisseur sont soudées les unes aux autres. De cette manière, une telle soudure empêche d'avoir recourt à des moyens de fixation de type vis ou rivet qui sont des sources d'alourdissement du véhicule.

Selon une caractéristique possible de l'invention, la largeur des bords repliés des longerons, qui est leur dimension suivant un axe transversal Y du véhicule, est inférieure à 20mm. Sur les véhicules existants pour lesquels les points de fixation sont réalisés dans les bords repliés des longerons, il était nécessaire d'avoir une largeur desdits bords de l'ordre de 30mm. En passant à 17mm, les bords repliés vont contribuer à alléger le véhicule.

Un véhicule selon l'invention présente l'avantage d'être allégé grâce à la présence de pattes de fixation permettant à un dispositif de chargement d'être fixé sur ledit véhicule et dont la conception judicieuse permet de s'affranchir de la présence de pièces habituellement utilisées, comme par exemple des entretoises. Il a de plus l'avantage de pouvoir posséder des longerons de largeur réduite toujours grâce à la présence de ces pattes de fixation, engendrant ainsi un allègement du véhicule, un encombrement réduit desdits longerons et donc des coûts réduits.

On donne ci-après, une description détaillée d'un mode de réalisation préféré d'un véhicule selon l'invention, en se référant aux figures suivantes :
[Fig. 1] représente une vue en perspective du dessous d'un véhicule de l'état de la technique possédant un châssis pour la fixation d'un dispositif de chargement,
[Fig. 2] représente une vue en coupe simplifiée d'un longeron d'un véhicule selon l'état de la technique,
[Fig. 3] représente une vue en perspective du dessous d'une zone d'un longeron d'un véhicule selon l'état de la technique montrant une patte de fixation,
[Fig. 4] représente une vue en perspective du dessus d'une zone d'un longeron d'un véhicule selon l'état de la technique montrant une patte de fixation et une entretoise partielle,
[Fig. 5] représente une vue en perspective du dessus d'une zone d'un longeron d'un véhicule selon l'état de la technique, montrant une entretoise,
[Fig. 6] représente une vue en perspective du dessus d'un longeron d'un véhicule selon l'invention montrant deux pattes de fixation,
[Fig. 7] représente une vue en perspective d'une patte de fixation d'un véhicule selon l'invention,
[Fig. 8] représente une vue en perspective sous un autre angle de la patte de fixation de la figure 6
[Fig. 9] représente une vue en coupe simplifiée d'un longeron d'un véhicule selon l'invention.

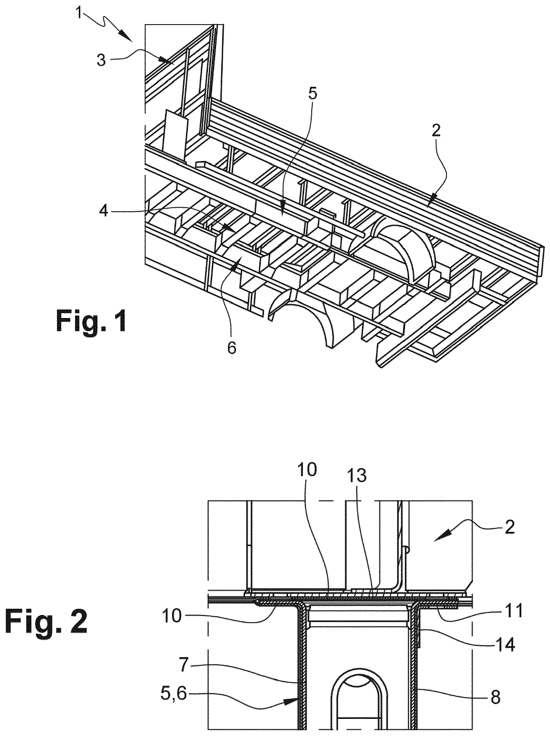

En se référant à la figure 1, un véhicule 1 de l'état de la technique destiné à embarquer un dispositif de chargement 2 comprend schématiquement un poste de pilotage 3 comportant un siège conducteur et au moins un siège passager situé à côté dudit siège conducteur, ainsi qu'un châssis 4 placé derrière ledit poste de pilotage 3. Le dispositif de chargement 2 qui peut par exemple être représenté par une benne, des panneaux ou au moins un container, est fixé sur le châssis 4 pour se retrouver derrière le poste de pilotage 3. Ce châssis 4 comprend deux longerons 5, 6 parallèles s'étendant suivant un axe longitudinal X du véhicule 1, et le dispositif de chargement 2 vient se fixer sur lesdits deux longerons 5, 6.

En se référant aux figures 1 et 2, chaque longeron 5, 6 est délimité par deux parois parallèles 7, 8 s'étendant dans un plan vertical et longitudinal XZ du véhicule 1, par un fond 9 s'étendant dans un plan horizontal et par une paroi supérieure 10 permettant de clôturer ledit longeron 5, 6. Les parois verticales 7, 8 sont chacune prolongées par un bord replié 11, 12 à 90°, de sorte que les deux bords 11, 12 repliés d'un longeron 5, 6 se retrouvent inscrits dans un même plan horizontal. Ces deux bords repliés 11, 12 s'étendent sur toute la longueur du longeron 5, 6 et saillent des parois verticales 7, 8 suivant un axe transversal Y du véhicule 1. Les deux bords repliés 11, 12 d'un même longeron 5, 6 saillent vers l'extérieur dudit longeron 5, 6 en s'éloignant de l'espace interne délimité par ce longeron 5, 6. La paroi supérieure 10 du longeron 5, 6 s'étend sur la totalité des bords repliés 11, 12.

En se référant aux figures 1, 2, 3 et 4 plusieurs points de fixation du dispositif de chargement 2 sur le châssis 4 sont répartis le long des longerons 5, 6. Chaque point de fixation comprend une entretoise 13 et deux pattes de fixation 14 situées de part et d'autre de ladite entretoise 13. Chaque patte de fixation 14 comprend une première paroi 15 et une deuxième paroi 16 en continuité l'une de l'autre et faisant entre elles un angle droit, la première paroi 15 venant se fixer à une paroi verticale 7, 8 du longeron 5, 6 et la deuxième paroi 16 venant se fixer à un bord replié 11, 12. Plus précisément, la première paroi 15 vient au contact d'une surface extérieure de la paroi verticale 7, 8 avant d'être fixée à ladite paroi au moyen de deux vis 17, 18 et la deuxième paroi 16 vient au contact d'une surface inférieure du bord replié 11, 12 avant d'être fixée audit bord replié au moyen de deux vis 19, 20. Chaque bord replié 11, 12 présente une largeur importante, typiquement de l'ordre de 30mm, qui est sa dimension considérée suivant un axe transversal Y du véhicule 1, si bien que la deuxième paroi 16 de la patte de fixation 14 demeure incluse dans ledit bord replié sans émerger de celui-ci. Les bords repliés 11, 12 comportent sur toute leur longueur et à intervalle régulier des ouvertures traversantes, et la deuxième paroi 16 de chaque patte de fixation 14 comprend également une ouverture traversante 25 en position centrale. Il est à noter que la paroi supérieure 10 du longeron 5, 6, qui recouvre les deux bords repliés 11, 12 possède également des ouvertures qui se superposent à celles desdits bords repliés 11, 12.

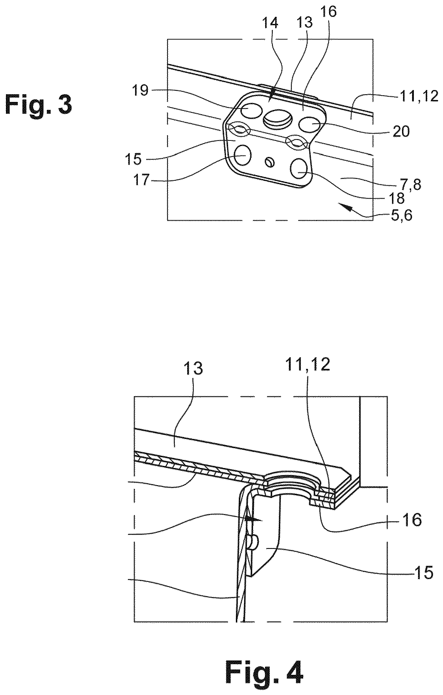

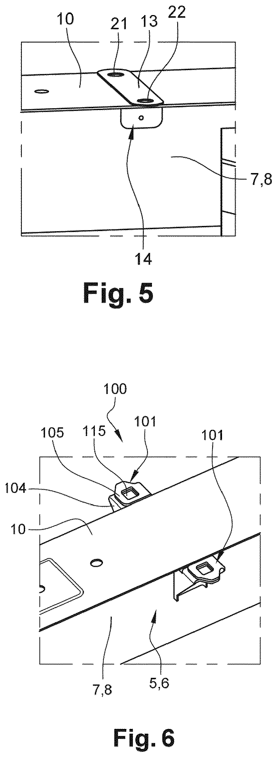

En se référant aux figures 4 et 5, chaque entretoise 13 est une pièce plane et allongée, présentant une faible épaisseur. Cette pièce 13 comporte deux extrémités arrondies, considérées suivant un axe longitudinal de ladite pièce 13, chacune desdites extrémité possédant une ouverture traversante 21, 22 de forme circulaire.

En se référant aux figures 2, 3, 4 et 5, chaque point de fixation sur un longeron 5, 6 permettant de fixer le dispositif de chargement 2 comprend :
- deux pattes de fixation 14 situées de part et d'autre du longeron 5, 6 en étant alignées suivant un axe transversal Y du véhicule, et de sorte que l'ouverture 25 de la deuxième paroi 16 soit superposée aux deux ouvertures déjà superposées de la paroi supérieure 10 et des bords repliés 11, 12,
- une entretoise 13 s'étendant au-dessus de la paroi supérieure 10 du longeron 5, 6 dans une direction pour laquelle son axe longitudinal s'étend parallèlement à un axe transversal Y du véhicule 1. Cette entretoise 13 est disposée sur le longeron 5, 6 de sorte que ses ouvertures traversantes 21, 22 se superposent chacune aux trois ouvertures déjà superposées, de la paroi supérieure 10, du bord replié 11, 12 et de la deuxième paroi 16 de la patte de fixation 14.

Une fois que les quatre ouvertures précédemment évoquées son superposées, une vis passe à travers celles-ci pour fixer le dispositif de chargement. Les entretoises 13 servent à légèrement surélever le dispositif de chargement 2 sur les longerons 5, 6 une fois que ledit chargement sera posé sur les longerons 5, 6.

Or, comme vu précédemment, une telle configuration de fixation du dispositif de chargement 2 sur le châssis 4 comporte des inconvénients parmi lesquels :
- la présence de plusieurs entretoises 13 le long de chaque longeron 5, 6 qui augmente significativement le poids du véhicule,
- la nécessité pour les bords repliés 11, 12 des parois verticales 7, 8 des longerons 5, 6 de posséder une largeur importante, typiquement supérieure à 30mm, de façon à pouvoir réaliser une ouverture dans ceux-ci sans fragiliser la structure du longeron. Il en résulte également une augmentation significative du poids du véhicule.

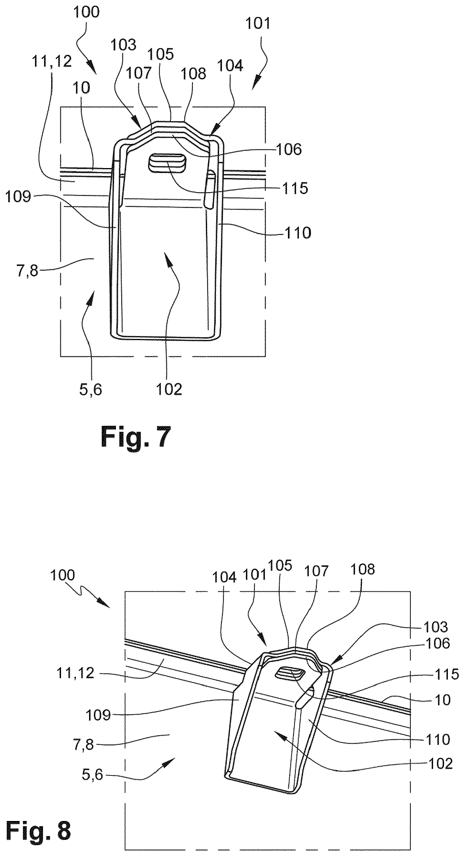

En se référant aux figures 6, 7, 8 et 9, un véhicule 100 selon l'invention met en oeuvre des pattes de fixation 101 dont la géométrie a été modifiée pour s'affranchir des inconvénients ci-avant mentionnés.

Par rapport au mode de réalisation précédemment décrit et correspondant à un véhicule de l'état de la technique, les principales différences sont que :
- les bords repliés 11, 12 des parois verticales 7, 8 des longerons 5, 6 possèdent une largeur réduite, typiquement égale à 17mm au lieu de 30mm pour les véhicules existants,
- les entretoises 13 ont été supprimées,
- les pattes de fixation 101 ont été modifiées.

La description détaillée qui va suivre, se focalise essentiellement sur ces nouvelles pattes de fixation 101.

En se référant aux figures 5, 6, 7 et 8, chaque patte de fixation 101 comprend une première paroi 102 et une deuxième paroi 103 en continuité l'une de l'autre et faisant entre elles un angle droit, la première paroi 102 venant se fixer à une paroi verticale 7, 8 du longeron 5, 6 et la deuxième paroi 103 venant se fixer à un bord replié 11, 12. Plus précisément, la première paroi 102 vient au contact d'une surface extérieure de la paroi verticale 7, 8 avant d'être fixée à ladite paroi par soudure, et la deuxième paroi 103 vient au contact d'une surface inférieure du bord replié 11, 12 avant d'être fixée audit bord replié par soudure. La deuxième paroi 103 présente un tronçon d'extrémité 104 émergeant du bord replié 11, 12 suivant un axe transversal Y du véhicule, ledit tronçon d'extrémité 104 possédant une surépaisseur 105 saillant au-dessus du bord replié 11, 12 et contre laquelle le dispositif de chargement 2 est destiné à venir au contact, ladite surépaisseur 105 étant dotée d'une ouverture traversante 115.

De façon plus détaillée, chaque patte de fixation 101 comprend trois éléments :
- un premier élément comportant la première paroi 102 et une première paroi d'épaisseur 106 disposée à 90° de ladite première paroi 102 et constituant une partie de la deuxième paroi 103,
- un deuxième élément constitué par une deuxième paroi d'épaisseur 107 se superposant à ladite première paroi d'épaisseur 106, et
- un troisième élément constitué par une troisième paroi d'épaisseur 108 se superposant à ladite deuxième paroi d'épaisseur 107.

La deuxième paroi d'épaisseur 107 et la troisième paroi d'épaisseur 108 forment le tronçon d'extrémité 104 de la deuxième paroi 102, qui émerge du bord replié 11, 12 à la fois suivant un axe transversal Y du véhicule 100 et suivant un axe vertical Z, en étant surélevé par rapport au bord replié 11, 12. Les trois parois d'épaisseur 106, 107, 108 possèdent chacune une ouverture et sont disposées entre elles de telle manière que les trois ouvertures se superposent pour former l'ouverture traversante 115 la surépaisseur 105 du tronçon d'extrémité 104..

Chaque patte de fixation 101 présente deux faces parallèles 109, 110 de forme triangulaire reliant la première paroi 102 à la deuxième paroi 103, lesdites deux faces triangulaires servant à consolider chaque point de fixation du dispositif de chargement 2 sur le châssis 4, en rigidifiant la patte de fixation 101. Plus précisément, au sein d'une même patte de fixation 101, une face triangulaire 109 relie la première paroi 101 à la deuxième paroi d'épaisseur 107 et l'autre face triangulaire 110 relie la première paroi 101 à la troisième paroi d'épaisseur 108.

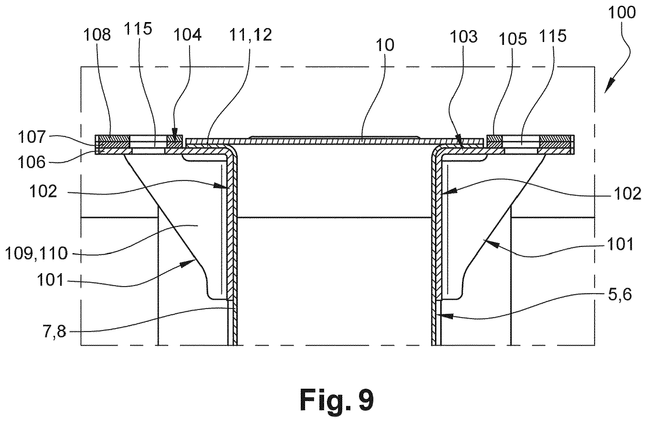

En se référant aux figures 6 et 9, chaque point de fixation d'un dispositif de chargement 2 sur un longeron 5, 6 du châssis 4 d'un véhicule 100 selon l'invention, comprend deux pattes de fixation 101 situées de part et d'autre du longeron 5, 6 et alignées suivant un axe transversal Y du véhicule 100. Ces deux pattes de fixation 101 font apparaitre les deux surépaisseurs 105 encadrant le longeron 5, 6 et émergeant de celui-ci à la fois transversalement et verticalement. Ces deux surépaisseurs 105 vont avantageusement jouer le rôle de l'entretoise 13 dans le mode de réalisation précédemment décrit et correspondant à un véhicule 1 de l'état de la technique, et vont porter les moyens de fixation du dispositif de chargement 2 à travers la présence de l'ouverture traversante 115 pratiquée dans chacune desdites surépaisseurs 105. Ces moyens de fixation n'ayant plus à traverser les bords repliés 11, 12 des longerons 5, 6, lesdits bords 11, 12 peuvent avoir une largeur réduite, typiquement de 17mm.

L'élimination des entretoises 13, associée à des bords repliés 11, 12 de largeur réduite, permet de réduire de façon significative le poids du véhicule. Ces nouvelles pattes de fixation 101 permettent également de limiter le nombre de pièces impliquées dans la fixation du dispositif de chargement 2, occasionnant des économies et limitant le temps de montage dudit dispositif de chargement 2 sur le châssis 4.

## Revendications

1. Véhicule (1, 100) comprenant un châssis (4) destiné à supporter un dispositif de chargement (2), ledit châssis (4) comprenant deux longerons (5, 6) parallèles s'étendant suivant un axe longitudinal X dudit véhicule, chaque longeron (5, 6) étant délimité par deux parois verticales (7, 8) et parallèles s'étendant suivant un axe longitudinal X du véhicule et possédant chacune un bord supérieur (11, 12) replié à 90° s'étendant vers l'extérieur dudit longeron (5, 6), ledit véhicule (1, 100) comprenant des moyens de fixation dudit dispositif de chargement (2) disposés le long de chaque longeron (5, 6) et comportant chacun deux pattes de fixation (14, 101) alignées suivant un axe transversal Y du véhicule et placées de part et d'autre du longeron (5, 6), chaque patte de fixation (14, 101) possédant une première paroi (15, 102) fixée à une paroi verticale (7, 8) du longeron (5, 6) et une deuxième paroi (16, 103) fixée à une surface inférieure du bord supérieur replié (11, 12) de ladite paroi verticale (7, 8), **caractérisé en ce que** la deuxième paroi (103) présente un tronçon d'extrémité (104) émergeant du bord replié (11, 12) suivant un axe transversal Y du véhicule (100), et **en ce que** ledit tronçon d'extrémité (104) présente une surépaisseur (105) saillant au-dessus du bord replié (11, 12) et contre laquelle le dispositif de chargement (2) est destiné à venir au contact, ladite surépaisseur (105) étant dotée d'une ouverture (115).

2. Véhicule selon la revendication 1, **caractérisé en ce que** l'ouverture (115) de la surépaisseur (105) est traversante pour le passage d'un élément de fixation.

3. Véhicule selon la revendication 2, **caractérisé en ce que** l'ouverture traversante (115) est de forme carrée et dont les coins sont arrondis.

4. Véhicule selon l'une quelconque des revendications 1 à 3, **caractérisé en ce que** la première paroi (102) est soudée à la paroi verticale (7, 8) du longeron (5, 6).

5. Véhicule selon l'une quelconque des revendications 1 à 4, **caractérisé en ce que** chaque patte de fixation (101) comprend trois éléments dont un premier élément comporte la première paroi (102) et une première paroi d'épaisseur (106) disposée à 90° de ladite première paroi (102) et constituant une partie de la deuxième paroi (103), dont un deuxième élément est constitué par une deuxième paroi d'épaisseur (107) se superposant à ladite première paroi d'épaisseur (106), et dont un troisième élément est constitué par une troisième paroi d'épaisseur (108) se superposant à ladite deuxième paroi d'épaisseur (107), et **en ce que** la deuxième paroi d'épaisseur (107) et la troisième paroi d'épaisseur (108) forment le tronçon d'extrémité (104) de la deuxième paroi (103) qui émerge du bord replié (11, 12) suivant un axe transversal Y du véhicule (100).

6. Véhicule selon la revendication 5, **caractérisé en ce que** la première paroi d'épaisseur (106), la deuxième paroi d'épaisseur (107) et la troisième paroi d'épaisseur (118) possèdent chacune une ouverture, et **en ce que** lesdites trois parois d'épaisseur (106, 107, 108) sont disposées les unes par rapport aux autres de sorte que leurs ouvertures se superposent pour former l'ouverture traversante (115) de la surépaisseur (105).

7. Véhicule selon l'une quelconque des revendications 5 ou 6, **caractérisé en ce que** chaque patte de fixation (101) présente deux faces parallèles (109, 110) de forme triangulaire, et **en ce que** chaque face triangulaire (109, 110) relie la première paroi (102) à la deuxième paroi (103) et sert à consolider chaque point de fixation du dispositif de chargement (2) en rigidifiant la patte de fixation (101).

8. Véhicule selon la revendication 7, **caractérisé en ce que** pour chaque patte de fixation (101), une face triangulaire (109) relie la première paroi (102) à la deuxième paroi d'épaisseur (107) et l'autre face triangulaire (110) relie la première paroi (102) à la troisième paroi d'épaisseur (108).

9. Véhicule selon l'une quelconque des revendications 5 à 8, **caractérisé en ce que** les parois d'épaisseur (106, 107, 108) sont soudées les unes aux autres.

10. Véhicule selon l'une quelconque des revendications 1 à 9, **caractérisé en ce que** la largeur des bords repliés (11, 12) des longerons (5, 6), qui est leur dimension suivant un axe transversal Y du véhicule, est inférieure à 20mm.

## Patentansprüche

1. Fahrzeug (1, 100), umfassend ein Gestell (4) zum Tragen einer Ladevorrichtung (2), wobei das Gestell (4) zwei parallele Längsträger (5, 6) umfasst, die sich entlang einer Längsachse X des Fahrzeugs erstrecken, wobei jeder Längsträger (5, 6) durch zwei vertikale und parallele Wände (7, 8) begrenzt ist, die sich entlang einer Längsachse X des Fahrzeugs erstrecken und jeweils eine obere Kante (11, 12) besitzen, die um 90° gefaltet ist und sich vom Längsträger (5, 6) nach außen erstreckt, wobei das Fahrzeug (1, 100) Mittel zur Befestigung der Ladevorrichtung (2) umfasst, die entlang jedes Längsträgers (5, 6) angeordnet sind und jeweils zwei Befestigungslaschen (14, 101) aufweisen, die entlang einer Querachse Y des Fahrzeugs ausgerichtet und auf beiden Seiten des Längsträgers (5, 6) angeordnet sind, wobei jede Befestigungslasche (14, 101) eine an einer vertikalen Wand (7, 8) des Längsträgers (5, 6) befestigte erste Wand (15, 102) und eine an einer Unterseite der gefalteten oberen Kante (11, 12) der vertikalen Wand (7, 8) befestigte zweite Wand (16, 103) besitzt, **dadurch gekennzeichnet, dass** die zweite Wand (103) einen Endabschnitt (104) aufweist, der über den gefalteten Rand (11, 12) entlang einer Querachse Y des Fahrzeugs (100) herausragt, und dass der Endabschnitt (104) eine Verdickung (105) aufweist, die über den gefalteten Rand (11, 12) vorsteht und mit der die Ladevorrichtung (2) in Kontakt kommen soll, wobei die Verdickung (105) mit einer Öffnung (115) versehen ist.

2. Fahrzeug nach Anspruch 1, **dadurch gekennzeichnet, dass** die Öffnung (115) der Verdickung (105) für den Durchgang des Befestigungselements durchgängig ist.

3. Fahrzeug nach Anspruch 2, **dadurch gekennzeichnet, dass** die Durchgangsöffnung (115) eine quadratische Form aufweist, deren Ecken abgerundet sind.

4. Fahrzeug nach einem der Ansprüche 1 bis 3, **dadurch gekennzeichnet, dass** die erste Wand (102) an die vertikale Wand (7, 8) des Längsträgers (5, 6) angeschweißt ist.

5. Fahrzeug nach einem der Ansprüche 1 bis 4, **dadurch gekennzeichnet, dass** jede Befestigungslasche (101) drei Elemente umfasst, von denen ein erstes Element die erste Wand (102) und eine erste Dickenwand (106) aufweist, die in einem Winkel von 90° zur ersten Wand (102) angeordnet ist und einen Teil der zweiten Wand (103) bildet, von denen ein zweites Element durch eine zweite Dickenwand (107) gebildet ist, die sich mit der ersten Dickenwand (106) überlagert, und von denen ein drittes Element durch eine dritte Dickenwand (108) gebildet ist, die sich mit der zweiten Dickenwand (107) überlagert, und dass die zweite Dickenwand (107) und die dritte Dickenwand (108) den Endabschnitt (104) der zweiten Wand (103) bilden, der über den gefalteten Rand (11, 12) entlang einer Querachse Y des Fahrzeugs (100) herausragt.

6. Fahrzeug nach Anspruch 5, **dadurch gekennzeichnet, dass** die erste Dickenwand (106), die zweite Dickenwand (107) und die dritte Dickenwand (118) jeweils eine Öffnung besitzen und dass die drei Dickenwände (106, 107, 108) so zueinander angeordnet sind, dass sich ihre Öffnungen überlagern, um die Durchgangsöffnung (115) der Verdickung (105) zu bilden.

7. Fahrzeug nach einem der Ansprüche 5 oder 6, **dadurch gekennzeichnet, dass** jede Befestigungslasche (101) zwei parallele Flächen (109, 110) von rechteckiger Form aufweist und dass jede dreieckige Fläche (109, 110) die erste Wand (102) mit der zweiten Wand (103) verbindet und dazu dient, jeden Befestigungspunkt der Ladevorrichtung (2) durch Versteifen der Befestigungslasche (101) zu festigen.

8. Fahrzeug nach Anspruch 7, **dadurch gekennzeichnet, dass** bei jeder Befestigungslasche (101) eine dreieckige Fläche (109) die erste Wand (102) mit der zweiten Dickenwand (107) verbindet und die andere dreieckige Fläche (110) die erste Wand (102) mit der dritten Dickenwand (108) verbindet.

9. Fahrzeug nach einem der Ansprüche 5 bis 8, **dadurch gekennzeichnet, dass** die Dickenwände (106, 107, 108) miteinander verschweißt sind.

10. Fahrzeug nach einem der Ansprüche 1 bis 9, **dadurch gekennzeichnet, dass** die Breite der gefalteten Kanten (11, 12) der Längsträger (5, 6), die ihre Abmessung entlang einer Querachse Y des Fahrzeugs ist, weniger als 20 mm beträgt.

## Claims

1. Vehicle (1, 100) comprising a chassis (4) intended to support a loading device (2), said chassis (4) comprising two parallel side members (5, 6) extending along a longitudinal axis X of said vehicle, each side member (5, 6) being delimited by two vertical and parallel walls (7, 8) that extend along a longitudinal axis X of the vehicle and each have an upper edge (11, 12) bent at 90° extending towards the outside of said side member (5, 6), said vehicle (1, 100) comprising fastening means of said loading device (2) that are disposed along each side member (5, 6) and each have two fastening tabs (14, 101) aligned along a transverse axis Y of the vehicle and placed on either side of the side member (5, 6), each fastening tab (14, 101) having a first wall (15, 102) fastened to a vertical wall (7, 8) of the side member (5, 6) and a second wall (16, 103) fastened to a lower surface of the bent upper edge (11, 12) of said vertical wall (7, 8), **characterized in that** the second wall (103) has an end section (104) emerging from the bent edge (11, 12) along a transverse axis Y of the vehicle (100), and **in that** said end section (104) has an overthickness (105) protruding above the bent edge (11, 12) and against which the loading device (2) is intended to come into contact, said overthickness (105) being provided with an opening (115).

2. Vehicle according to Claim 1, **characterized in that** the opening (115) in the overthickness (105) is a through-opening for the passage of a fastening element.

3. Vehicle according to Claim 2, **characterized in that** the through-opening (115) has a square shape of which the corners are rounded.

4. Vehicle according to any one of Claims 1 to 3, **characterized in that** the first wall (102) is welded to the vertical wall (7, 8) of the side member (5, 6).

5. Vehicle according to any one of Claims 1 to 4, **characterized in that** each fastening tab (101) comprises three elements of which a first element has the first wall (102) and a first wall having thickness (106) disposed at 90° to said first wall (102) and constituting a part of the second wall (103), of which a second element is constituted by a second wall having thickness (107) superposed on said first wall having thickness (106), and of which a third element is constituted by a third wall having thickness (108) superposed on said second wall having thickness (107), and **in that** the second wall having thickness (107) and the third wall having thickness (108) form the end section (104) of the second wall (103) that emerges from the bent edge (11, 12) along a transverse axis Y of the vehicle (100).

6. Vehicle according to Claim 5, **characterized in that** the first wall having thickness (106), the second wall having thickness (107) and the third wall having thickness (118) each have an opening, and **in that** said three walls having thickness (106, 107, 108) are disposed with respect to one another such that their openings are superposed so as to form the through-opening (115) in the overthickness (105).

7. Vehicle according to either one of Claims 5 and 6, **characterized in that** each fastening tab (101) has two parallel faces (109, 110) of triangular shape, and **in that** each triangular face (109, 110) connects the first wall (102) to the second wall (103) and serves to consolidate each fastening point of the loading device (2) by stiffening the fastening tab (101).

8. Vehicle according to Claim 7, **characterized in that**, for each fastening tab (101), a triangular face (109) connects the first wall (102) to the second wall having thickness (107) and the other triangular face (110) connects the first wall (102) to the third wall having thickness (108).

9. Vehicle according to any one of Claims 5 to 8, **characterized in that** the walls having thickness (106, 107, 108) are welded to one another.

10. Vehicle according to any one of Claims 1 to 9, **characterized in that** the width of the bent edges (11, 12) of the side members (5, 6), which is their dimension along a transverse axis Y of the vehicle, is less than 20 mm.
